# EUROPEAN PATENT APPLICATION

(11) **EP 2 871 849 A1**
(43) Date of publication of application: **13.05.2015**
(21) Application number: 13829648.8
(22) Date of filing: 31.07.2013
(51) Int. Cl.: H04N 21/262, H04N 21/6377, H04N 21/6437

(54) **PROGRAM DEMANDING METHOD AND DEVICE**

(30) Priority: 16.08.2012 CN 201210291553
(71) Applicant: ZTE Corporation, Shenzhen, Guangdong 518057 (CN)
(72) Inventor: XIAO, Rong, Shenzhen Guangdong 518057 (CN); LIU, Shu, Shenzhen Guangdong 518057 (CN); ZHANG, Hai, Shenzhen Guangdong 518057 (CN)
(74) Representative: Modiano, Micaela Nadia
(86) International application number: PCT/CN2013/080463
(87) International publication number: WO 2014/026544

(57) **Abstract**

A program demanding method and device are provided. The method includes: a set top box adding programs selected by a user into a customizing column, and generating a video on demand (VOD) program list; initiating a VOD playing request to a streaming media server after receiving an instruction of the user, wherein the VOD playing request carries the VOD program list. According to the foregoing technical solution, the user can select a plurality of VOD programs which the user wants to watch on an EPG and make them into a program list, and the streaming media server automatically plays programs in the list according to the program list, so as to achieve an objective of being capable of customizing the video on demand, and provide a good user experience.

## Description

### Technical Field

The present invention relates to the field of program on demand technologies, and more particularly, to a program demanding method and device for carousel channels in the IPTV system.

### Background of the Invention

Interactive Personality TV (IPTV) is a new technology which provides users with a variety of interactive services including the digital television by the usage of broadband cable network integrating a variety of techniques such as the Internet, multimedia and communications. It is well adapted to the current trend of network rapid development, and fully and effectively uses a variety of network resources.

Video On Demand (VOD) service is a primary service of IPTV. Usually the operators show the programs which are released on the streaming media server in advance on an Electronic Program Guide (EPG), the user browses and selects a program desired to watch via the EPG, obtains the program information via the EPG, then sends the information about requesting the program to the streaming media server through signaling, and then the streaming media server provides the user with the media service.

But currently a user of the video on demand system typically can select only one program at a time, and when the program ends, the user needs to reselect. Both the interaction and the user experience are relative poor.

### Summary of the Invention

To solve the technical problem, the embodiment of the present invention provides a program demanding method and device, to achieve the objective of customizing video on demand and provide a good user experience.

To solve the abovementioned technical problem, the following technical solution is used.

A program demanding method, comprising:
a set top box adding programs selected by a user into a customizing column to generate a video on demand program list;
after receiving an instruction of the user, initiating a video on demand playing request to a streaming media server, wherein the video on demand playing request carries the video on demand program list.
Alternatively, the video on demand playing request is a Real Time Streaming Protocol message;
the step of the video on demand playing request carrying the video on demand program list comprises:
   adding a content-body extension field in a describe signaling of the real time streaming protocol message, wherein the content body comprises the video on demand program list.

A set top box, comprising an electronic program guide module and a processing module, wherein:
the electronic program guide module is configured to: add programs selected by a user to a customizing column to generate a video on demand program list;
the processing module is configured to: after receiving an instruction of the user, initiate a video on demand playing request to a streaming media server, and carry the video on demand program list in the video on demand playing request.

Alternatively, the video no demand playing request is a Real Time Streaming Protocol message,
the processing module is configured to carry the video on demand program list in the video on demand playing request in the following manner: adding a content body extension field in a describe signaling of the real-time streaming protocol message, wherein the content body comprises the video on demand program list.

A program demanding method, comprising:
after receiving a video on demand playing request carrying a video on demand program list, the streaming media server storing the video on demand program list;
playing programs to a corresponding set top box according to an order of the program list.

Alternatively, the method further comprises:
the streaming media server sends a video on demand program ending message to the set top box when playing to the ending position of the last program in the video on demand program list.

Alternatively, the method further comprises:
if the streaming media server receives a fast forwarding command, fast-forwarding the programs in the video on demand program list, and sending a video on demand program ending message to the set top box when fast forwarding to the ending position of the last program in the video on demand program list,, or
if the streaming media server receives a rewinding command, rewinding the programs in the video on demand program list, and sending a video on demand program beginning message to the set top box when rewinding to a beginning position of a first program in the video on demand program list.

Alternatively, the method further comprises:
if the streaming media server receives a specified-time-point playing request, switching the program to the specified time point of the program specified in the specified-time-point playing request.

A streaming media server, comprising a first module and a second module, wherein:
the first module is configured to: after receiving a video on demand playing request carrying a video on demand program list, store the video on demand program list;
the second module is configured to: play programs to a corresponding set top box in accordance with the order of the program list.

Alternatively, the second module is further configured to: send a video on demand program ending message to the set top box when playing to the ending position of the last program in the video on demand program list.

Alternatively, the second module is further configured to:
when receiving a fast forwarding command, fast forward programs in the video on demand program list, and send a video on demand program ending message to the set top box when fast forwarding to the ending position of the last program in the video on demand program list;
when receiving a rewinding command, rewind the programs in the video on demand program list, and send a video on demand program beginning message to the set top box when rewinding to a beginning position of a first program in the video on demand program list.

Alternatively, the second module is further configured to:
when receiving a specified-time-point playing request, switch the program to the specified time point of the program specified in the specified-time-point playing request.

With the program demanding method and device in accordance with the abovementioned technical scheme, the user can select a plurality of VOD programs which the user wants to watch on the EPG, and make them into a program list, the streaming media server automatically plays the programs in the list according to the program list, so as to achieve the objective of customizing the video on demand and provide a good user experience.

### Brief Description of the Drawings

FIG. 1 is a flow chart of a program demanding method in accordance with an embodiment of the present invention;
FIG. 2 a schematic diagram of a set top box in accordance with an embodiment of the present invention;
FIG. 3 is a schematic diagram of a streaming media server in accordance with an embodiment of the present invention;
FIG. 4 is a schematic diagram of an IPTV system in accordance with an embodiment of the present invention.

### Preferred Embodiments of the Invention

To make the objectives, technical solutions and advantages of the present invention more apparent, hereinafter in conjunction with the accompanying drawings, the embodiments of the present invention will be described in detail. It should be noted that, in the case of no conflict, the embodiments and features in the embodiments of the present application may be arbitrarily combined with each other.

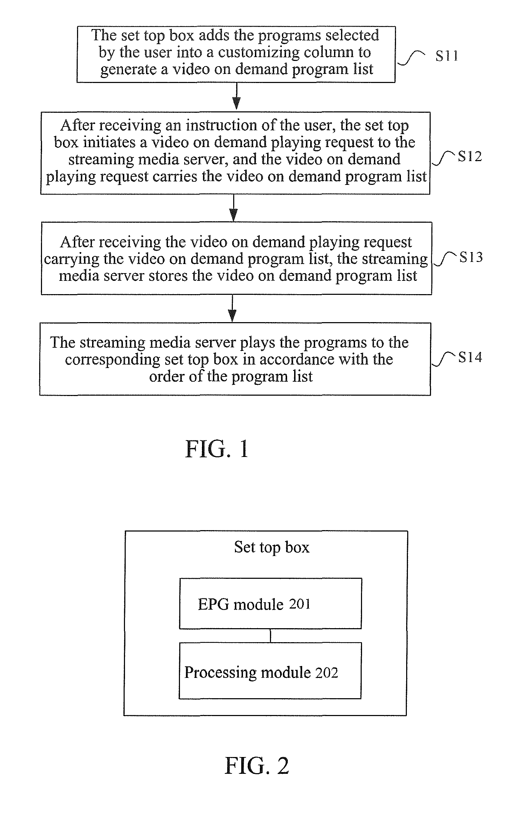

FIG. 1 is a flow chart of a program demanding method in accordance with an embodiment of the present invention, as shown in FIG. 1, the method in accordance with the present embodiment comprises:
S11, the set top box adds the programs selected by the user into a customizing column to generate a video on demand program list;
S12, after receiving an instruction of the user, the set top box initiates a video on demand playing request to the streaming media server, and the video on demand playing request carries the video on demand program list;
S13, after receiving the video on demand playing request carrying the video on demand program list, the streaming media server stores the video on demand program list;
S14, the streaming media server plays the programs to the corresponding set top box in accordance with the order of the program list.

Through the method in accordance with the present embodiment, a VOD program customizing column can be deployed on the EPG, the set top box (STB) user can select VOD programs by browsing the EPG and add to a column to customize the user's own playlist. Then the STB brings the VOD program list customized by the user to the streaming media server via the extension field in the video on demand signaling of the Real Time Streaming Protocol (RTSP), the streaming media server stores the program list and then automatically plays the programs in the list in accordance with the order of the list.

In the present embodiment, a ContentBody extension field, actually a content body in compliance with the Session Description Protocol (SDP) syntax, can be added to the Describe signaling of the RTSP. The Content-Body is used to carry one or more a=x-playlist attribute lines to the streaming service system to indicate one or more contents which need to be played and their related attributes.

The x-playlist attributes are defined as follows:
a=x-playlist:<contentID><type>[bitrate][<range>]

Semantic requirements:
a = "" is a SDP syntax describing the media attributes, which conforms to the RFC2327.

contentID represents an identifier of the content asset.

type identifies the content type, and can be respectively valued as ad (identifying advertising content), vod (general video on demand program) and npvr (time-shifted program). This parameter is optional.

Bitrate is the code rate of a media file, and its unit is bps. This parameter is optional.

range represents the playing range, and its format is [<start-npt>]-[<stop-npt>]. The start-npt identifies the playing beginning position of the content file, and the stop-npt identifies the playing ending position of the content file, and the npt is in seconds.

For the content files of the contentIDs listed in the x-playlist, the streaming service server needs to play them in accordance with the range scope.

This embodiment can be compatible with two modes: one content and a plurality of contents, namely, normal playing mode and list playing mode.

### (1) Normal playing mode

In the case that the SDP content body has only one x-playlist content, it is called the normal playing mode.

In the normal playing mode, when normally or reversely playing to the start-npt or stop-npt point of the file, the streaming server system must send an ANNOUNCE command to the set top box to identify the EOS (End of Stream, reach to the ending position of video playing) or BOS (Begin of Stream, reach to the beginning position of video playing). This mode is equivalent to the general VOD.

### (2) List playing mode

In the case that the SDP content body has a plurality of x-playlist contents, it is called list playing mode, and the streaming media server plays the contents in accordance with their orders listed in the SDP.

In the list playing mode, when normally or reversely playing to the start-npt or stop-npt point of a certain file, the streaming media server must automatically play the previous or next program according to all the list contents; only when reaching to the BOS (Begin of Stream, beginning position of video playing) of the first program in the list or the EOS (End of Stream, ending position of video playing) of the last program in the list does it need to send an ANNOUNCE command to the set top box.

In this mode, when the user requests the fast forwarding / rewinding service, start to fast forward / rewind from the current program playing position. When fast forward / rewind to the EOS/BOS of a program, the previous/next program is searched in the playlist, then fast forwarding/rewinding is performed with the same speed from the BOS/EOS of the next/previous program. Only when the BOS of the first program or the EOS of the last program arrives, the ANNOUNCE command is sent to the set top box.

When the user needs to play from the specified time point, after receiving a specified-time-point playing request, the streaming media server puts all the programs in order and takes them as a temporal continuous integrity, the time point and the program corresponding to the time period requested by the user can be calculated out according to the currently playing program, the beginning playing time of the current program and the current time, and the user is provided with services by switching to the corresponding program and playing it at the specified time point.

FIG. 2 is a schematic diagram of a set top box in accordance with an embodiment of the present invention, and as shown in FIG. 2, the set top box in accordance with the present embodiment comprises an EPG module 201 and processing module 202, wherein:
the EPG module 201 is configured to: add the programs selected by the user into the customizing column to generate a video on demand program list;
the processing module 202 is configured to: after receiving an instruction of the user, initiate a video on demand playing request to the streaming media server, and carry the video on demand program list in the video on demand playing request.
Wherein the video on demand playing request is a real-time streaming protocol message,
the processing module 202 is configured to initiate a video on demand playing request to the streaming media server in the following manner: adding a content body extension field in the describe signaling of the real time streaming protocol message, and the content body comprises the video on demand program list.

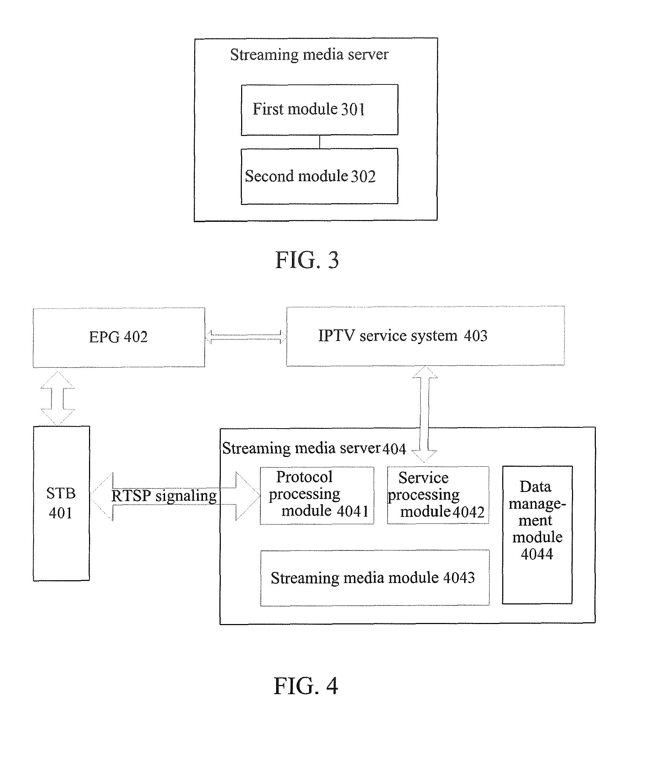

FIG. 3 is a schematic diagram of a streaming media server in accordance to an embodiment of the present invention, as shown in FIG. 3, the streaming media server in accordance with the present embodiment comprises first module 301 and second module 302, wherein:
   the first module 301 is configured to: after receiving a video on demand playing request carrying a video on demand program list, store the video on demand program list;
   the second module 302 is configured to: play the programs to the corresponding set top box in the order of the program list.

Wherein, the second module 302 is further configured to: when playing to the ending position of the last program in the video on demand program list, send a video on demand program ending message to the set top box.

Wherein, the second module 302 may be further configured to: if receiving a fast forwarding command, fast forward the programs in the video on demand program list, and send a video on demand program ending message to the set top box when fast forwarding to the ending position of the last program in the video on demand program list, or, if receiving a rewinding command, rewind programs in the video on demand program list, and send a video on demand program beginning message to the set top box when rewinding to the beginning position of the first program in the video on demand program list.

Wherein, the second module 302 may be further configured to: if receiving a specified-time-point playing request, switch the program to the specified time point of the program specified in the specified-time-point playing request.

FIG. 4 is a schematic diagram of an IPTV system in accordance with an embodiment of the present invention, as shown in FIG. 4, the system comprises STB401, EPG402, IPTV service system 403 and streaming media server 404, wherein:
the STB401 is configured to: interact with the EPG and the streaming media server to obtain services.

The EPG402 is configured to: be responsible for showing and providing services such as contents and channels provided by the system, and in the embodiment of the present invention, add a service of VOD customizing column for the user to customize a VOD list.

The IPTV service system 403 is configured to: manage services such as contents and channels on the streaming media server.

The streaming media server 404 comprises a protocol professing module 4041, service processing module 4042, streaming media module 4043 and data management module 4044, wherein:
the protocol processing module 4041 receives and processes the request sent by the user, and provides the user with services.

The service processing module 4042 is configured to: receive and process the service request sent by the IPTV service system, so as to achieve the content management on the streaming media server.

The streaming media module (equivalent to the second module 302 in the above description) 4043 is configured to: receive a media service request from the user management module and the channel management module, to achieve the media control, analysis, storage, and transmission.

The data management module 4044 is configured to: manage and store all kinds of data.

The combination of the service processing module 4042 and the data management module 4043 is equivalent to the first module 301 in the above description.

Based on the above system composition, the method for implementing the VOD customization and playing in the present embodiment is as follows.

In step 101, the IPTV service system sends a content releasing request to the streaming media server; the service processing module of the streaming media server notifies the streaming media module to pull the content down to the local node, and after being pulled down successfully, the streaming media module reports information such as the program length to the service processing module, the service processing module stores information such as the program ID and the program time length to the data management module, and reports a releasing successful message to the IPTV service system.

In step 102, the IPTV service system synchronizes the successfully released contents to the EPG, and the EPG displays the contents.

In step 103, the STB user browses the content via the EPG, adds the selected contents into the customizing column, and then the STB initiates a VOD playing request to the streaming media server, and sends the program list specifications in the customizing column to the protocol processing module in the streaming media server.

In step 104, the protocol processing module receives the VOD list playing request, saves the program list information in the list into the data management module, and notifies the streaming media module to start playing the programs according to their order, and the protocol processing module also needs to record the time requested by the user.

In step 105, the streaming media module plays the programs and sends the media stream to the STB user.

When a program finishes playing, the streaming media module reports an EOS ending message to the protocol processing module, the protocol processing module searches in the database management module for the next program in the playlist, and notifies the streaming media module to play the next program. Every time the program is switched, the protocol processing module records the current program and the time of start playing the current program. If the current program is the last one in the list, the protocol processing module sends an ANNOUNCE command to the STB user to indicate that it already plays to the end.

When the STB user requests a fast forwarding/rewinding service, start to fast forward/rewind from the current program playing position, when fast forward/rewind to the EOS/BOS of a program, the playlist is searched for the next/previous program, and then continue fast forwarding/rewinding with the same speed from the BOS/EOS of the next/previous program. Only when reaching the BOS of the first program or the EOS of the last program is an ANNOUNCE command sent to the set top box.

When the STB user requests for a specified-time-point playing, the protocol processing module acquires the time length of all the programs in the playlist from the data management module, puts all the programs in order, and takes them as a temporal continuous integrity. According to the current program previously recorded and the start playing time of the current program, the currently playing position of the program can be obtained by comparing with the current time. Then the corresponding program and the time point can be located by the locating time point requested by the STB user, and the corresponding program is switched to and played from the specified time point. For example, the highlights of a certain program are starting from the n^{th} minute, then the user specifies to play from the n^{th} time pint.

When the STB user requests for one key to the beginning, the protocol processing module locates to the beginning of the first program in the entire playlist to play.

When the STB user requests for one key to the end, the protocol processing module locates to the end of the last program in the entire playlist.

The above is only a preferred embodiment of the present invention, of course, the present invention may have a variety of other embodiments without departing from the spirit and essence of the invention, one skilled in the art when the present invention may be made corresponding changes and modifications, but these changes and modifications should be appropriate within the scope of protection of the rights of the present invention, the appended claims.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above description is only preferred embodiments of the present invention, and of course, the present invention may also have a variety of other embodiments, and a person skilled in the art can make various appropriate changes and modifications according to the present invention without departing from the spirit and essence of the present invention, and these appropriate changes and modification should be included within the protection scope of the appended claims of the present invention.

### Industrial Applicability

With the program demanding method and device in accordance with the abovementioned technical scheme, the user can select a plurality of VOD programs which the user wants to watch on the EPG, and make them into a program list, the streaming media server automatically plays the programs in the list according to the program list, so as to achieve the objective of customizing the video on demand and provide a good user experience. Therefore the present invention has very strong industrial applicability.

## Claims

1. A program demanding method, comprising:
a set top box adding programs selected by a user into a customizing column to generate a video on demand program list;
after receiving an instruction of the user, initiating a video on demand playing request to a streaming media server, wherein the video on demand playing request carries the video on demand program list.

2. The method of claim 1, wherein:
the video on demand playing request is a real time streaming protocol message;
the step of the video on demand playing request carrying the video on demand program list comprises:
adding a content-body extension field in a describe signaling of the real time streaming protocol message, wherein the content body comprises the video on demand program list.

3. A set top box, comprising an electronic program guide module and a processing module, wherein:
the electronic program guide module is configured to: add programs selected by a user to a customizing column to generate a video on demand program list;
the processing module is configured to: after receiving an instruction of the user, initiate a video on demand playing request to a streaming media server, and carry the video on demand program list in the video on demand playing request.

4. The set top box of claim 3, wherein, the video no demand playing request is a real time streaming protocol message,
the processing module is configured to carry the video on demand program list in the video on demand playing request in the following manner: adding a content body extension field in a describe signaling of the real-time streaming protocol message, wherein the content body comprises the video on demand program list.

5. A program demanding method, comprising:
after receiving a video on demand playing request carrying a video on demand program list, a streaming media server storing the video on demand program list;
playing programs to a corresponding set top box according to an order of the program list.

6. The method of claim 5, wherein, the method further comprises:
the streaming media server sending a video on demand program ending message to the set top box when playing to an ending position of a last program in the video on demand program list.

7. The method of claim 5, wherein, the method further comprises:
if the streaming media server receives a fast forwarding command, fast-forwarding the programs in the video on demand program list, and sending a video on demand program ending message to the set top box when fast forwarding to the ending position of the last program in the video on demand program list" or
if the streaming media server receives a rewinding command, rewinding the programs in the video on demand program list, and sending a video on demand program beginning message to the set top box when rewinding to a beginning position of a first program in the video on demand program list.

8. The method of claim 5, wherein, the method further comprises:
if the streaming media server receives a specified-time-point playing request, switching the program to the specified time point of the program specified in the specified-time-point playing request.

9. A streaming media server, comprising a first module and a second module, wherein:
the first module is configured to: after receiving a video on demand playing request carrying a video on demand program list, store the video on demand program list;
the second module is configured to: play programs to a corresponding set top box in accordance with an order of the program list.

10. The streaming media server of claim 9, wherein:
the second module is further configured to: send a video on demand program ending message to the set top box when playing to an ending position of a last program in the video on demand program list.

11. The streaming media server of claim 9, wherein: the second module is further configured to:
when receiving a fast forwarding command, fast forward programs in the video on demand program list, and send a video on demand program ending message to the set top box when fast forwarding to the ending position of the last program in the video on demand program list;
when receiving a rewinding command, rewind the programs in the video on demand program list, and send a video on demand program beginning message to the set top box when rewinding to a beginning position of a first program in the video on demand program list.

12. The streaming media server of claim 9, wherein: the second module is further configured to:
when receiving a specified-time-point playing request, switch the program to the specified time point of the program specified in the specified-time-point playing request.
